# EUROPEAN PATENT SPECIFICATION

(11) **EP 3 112 061 B1**
(45) Date of publication and mention of the grant of the patent: **16.05.2018**
(21) Application number: 15754611.0
(22) Date of filing: 26.02.2015
(51) Int. Cl.: B23B 19/02, B23Q 11/12, F16C 19/54, F16C 35/12, F16C 37/00, H02K 5/16

(54) **MAIN SHAFT DEVICE**
HAUPTWELLENVORRICHTUNG
DISPOSITIF D'ARBRE PRINCIPAL

(30) Priority: 28.02.2014 JP 2014039262; 27.08.2014 JP 2014173222
(43) Date of publication of application: 04.01.2017
(73) Proprietor: NSK Ltd., Tokyo 141-8560 (JP)
(72) Inventor: OGURI Shoichiro, Fujisawa-shi Kanagawa 251-8501 (JP); KATSUNO Yoshiaki, Fujisawa-shi Kanagawa 251-8501 (JP)
(74) Representative: Grünecker Patent- und Rechtsanwälte PartG mbB
(86) International application number: PCT/JP2015/055698
(87) International publication number: WO 2015/129825

(56) References cited:
- JP-A- H10 225 802
- JP-A- S61 121 802
- JP-A- 2000 317 754
- JP-A- 2004 249 439
- JP-A- 2004 249 439
- JP-A- 2010 221 360
- JP-A- 2010 221 360

## Description

### TECHNICAL FIELD

The invention relates to a main spindle apparatus and, more specifically, to a main spindle apparatus of a high-speed rotary machine such as a machine tool main spindle, a high-speed motor, a centrifugal machine or a turbo refrigerator.

### BACKGROUND ART

Speedup of a machine tool main spindle has been developed remarkably and, as a lubricating method for enabling speedup of the main spindle, there is employed oil air lubrication or oil mist lubrication. Also, as other lubrication methods, from viewpoints of environmental protection, grease lubrication not discharging lubricating oil to the outside is reviewed and is employed together with a rolling bearing using a light ceramic (for example, silicon nitride) rolling element providing excellent seizure resistance in high speed rotation.

Also, as a method for driving a high-speed rotation main spindle, there is generally used a so called motor built-in main spindle with a motor built in a main spindle rather than gear driving, belt driving or direct driving using a coupling.

In the thus structured high-speed main spindle, in addition to generation of heat from a rolling bearing supporting the main spindle, the built-in motor (stator and rotor) also generates heat in large quantities. In the machine tool main spindle, when the temperature rise of the main spindle is high, the main spindle is thermally deformed to lower the working precision thereof. Therefore, in order to suppress the temperature rise of the main spindle, there is used a method for charging cooling oil into a housing serving as a main spindle metal pipe from outside. Since the deformation of the main spindle due to thermal expansion occurs in the axial direction with a front bearing providing a fixed side bearing as the original point thereof, mostly, the outer peripheries of the front bearing serving as the fixed side bearing and the stator of the motor are cooled.

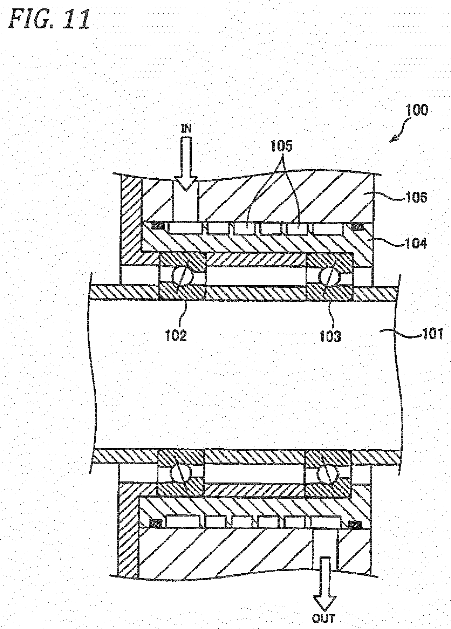

For example, in a conventional cooling apparatus 100 for suppressing generation of heat from the front bearing, as shown in Fig. 11, there are formed circumferential grooves 105 in the outer peripheral surface of a front housing 104 into which a pair of front bearings 102, 103 supporting the front side of a main spindle 101 are internally engaged. And, a cooling medium is circulated between the outer peripheral surface of the front housing 104 and the inner peripheral surface of the other housing 106, thereby cooling the front bearings 102, 103.

Also, the patent document 1 discloses, for use in a machine tool, a spindle cooling apparatus which includes a cooling medium passage formed in an inner ring spacer interposed between front and rear bearings and pressure feeds a cooling medium from a pump or the like to thereby cool the inner ring spacer.

Meanwhile, as the rear bearing serving as a free side bearing, there is often used a bearing (for example, a bearing having a bearing inside diameter dimension about φ10 ∼ φ30mm smaller than the fixed side bearing) slightly smaller in size than the front bearing. Thus, the dmn value of the bearing is reduced and, accordingly, the temperature rise reduces. Also, the rear bearing serves as a free side bearing, and the thermal deformation of the main spindle rear part has a smaller influence on the working precision than the front bearing (for example, supposing a rotation shaft expands in the axial direction relative to a non-rotary part, even when the main spindle rear side slidingly moves backward, the main spindle front side for mounting a cutting tool thereon is hard to shift). For these reasons, in most cases, to the rear bearing, there is not added a cooling structure which provides a complicated structure.
Patent document 2 discloses a main spindle apparatus according to the preamble of claim 1.

### RELATED ART REFERENCE

### PATENT DOCUMENT

Patent Document 1: JP-A-H04-133555
Patent Document 2: JP 61 121802

### SUMMARY OF THE INVENTION

### PROBLEMS TO BE SOLVED BY THE INVENTION

In the recent high-speed main spindles, there has been increasing a type in which the dmn value of a bearing used is a million or more, or more than a million and five hundred thousand, or two millions or more; and, accordingly, the dmn value of a rear bearing also increases, thereby increasing heat generation. In the case that heat generation of the rear bearing is large, since the internal temperature of the bearing rises, the viscosity of lubricating oil lowers, thereby raising a fear that seizure can be generated due to poor oil film formation in a rolling contact portion or the like.

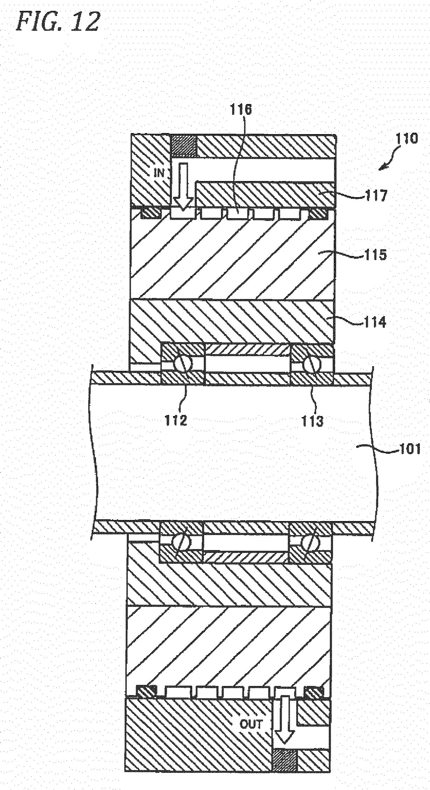

Therefore, in a cooling apparatus 110 shown in Fig. 12, while simplifying a peripheral structure, the rear bearing may be cooled. In this case, a sleeve 114, with which a pair of free side bearings 112, 113 supporting the rear side of a main shaft 101 are internally engaged, is internally engaged with a rear housing 115; and, in the outer peripheral surface of the rear housing 115, there is formed a circumferential groove 116. And, a cooling medium is circulated between the outer peripheral surface of the rear housing 115 and the inner peripheral surface of the other housing 117, thereby cooling the free side bearings 112, 113.

However, in the structure shown in Fig. 12, a cooling part is arranged at a position spaced in the radial direction from a heat generating part (bearings 112, 113), and heat transmission efficiency between the loose-engaged sleeve 114 and rear housing 115 is low, thereby resulting in low cooling efficiency. Therefore, although the rear housing is cooled, the sleeve is not cooled effectively to reduce a clearance between the rear housing and sleeve, thereby raising a fear of occurrence of poor slide. Thus, there is a possibility that heat expansion between the front bearing (fixed side bearing) and rear bearing (free side bearing) can generate a thrust load, thereby applying an excessive load to the bearings to damage them. Or, a pre-load loss can occur, thereby causing strange sounds or abnormal vibrations.

The invention is made in view of the above problems and thus has an object to provide a main spindle apparatus which can suppress a temperature rise caused by heat generation from a rear bearing with high efficiency and thus can extend the life of the rear bearing, that is, can extend the life of the main spindle apparatus and also can enhance working precision.

### MEANS FOR SOLVING THE PROBLEMS

The object of the invention can be attained by the following structures.
(1) A main spindle apparatus, including:
   a housing;
   a rotation shaft rotatable relative to the housing;
   a fixed side bearing having an inner ring externally engaged with one end side of the rotation shaft and an outer ring fixed to the housing;
   a sleeve arranged within the housing on the other end side of the rotation shaft and movable in the axial direction of the rotation shaft; and
   a free side bearing having an inner ring externally engaged with the other end side of the rotation shaft and an outer ring internally engaged with the sleeve, wherein:
      a cooling passage, allowing a cooling medium to flow therethrough, is formed between the outer peripheral surface of the sleeve and the inner peripheral surface of the housing, the outer and inner peripheral surfaces being opposed to each other;
      the cooling passage includes a first annular groove arranged on the axial-direction one end side of the sleeve, a second annular groove arranged on the other end side of the sleeve, and a streak of spiral groove having one end communicating with the first annular groove and the other end communicating with the second annular groove, the grooves being formed in the outer peripheral surface of the sleeve or in the inner peripheral surface of the housing; and
      the cooling medium is supplied to the first annular groove and after having flown through the cooling passage, the cooling medium is discharged from the second annular groove.
(2) The main spindle apparatus according to (I), wherein
   annular elastic members, configured to seal liquid tight between the outer peripheral surface of the sleeve and the inner peripheral surface of the housing, are arranged on the axial-direction two sides of the cooling passage.
(3) The main spindle apparatus according to (1) or (2), wherein
   chamfer parts are formed on the two end edges of the outer peripheral surface of the sleeve opposed to the inner peripheral surface of the housing.
(4) The main spindle apparatus according to any one of (1) to (3), wherein
   the side wall surface of at least any one of the first annular groove, the second annular groove and the spiral groove is inclined relative to a direction perpendicular to the axial direction.

### ADVANTAGES OF THE INVENTION

According to the main spindle apparatus of the invention, between the mutually opposed surfaces (the outer peripheral surface of the sleeve and the inner peripheral surface of the housing), there is formed a cooling passage through which a cooling medium can flow. The cooling passage includes a first annular groove arranged on the axial-direction one end side of the sleeve, a second annular groove arranged on the axial-direction other end side of the sleeve, and a streak of spiral groove having one end communicating with the first annular groove and the other end communicating with the second annular groove, while the grooves are respectively formed in the outer peripheral surface of the sleeve or in the inner peripheral surface of the housing. Thus, the sleeve internally engaged by the bearing can be cooled directly, thereby enabling high-efficiency cooling of the free side bearing. Also, since the internal temperature of the bearing lowers, lubrication oil film cut due to lowered viscosity in the rolling contact part and cage guide surface during rotation is made hard to occur and thus shortened life and bearing seizure due to poor lubrication can be prevented. And, since the housing and sleeve are cooled simultaneously, the radial shrinkage amounts of these two members are uniform and thus a clearance in the slide part (clearance between the housing and sleeve) is not reduced, thereby enabling prevention of slide failures caused by the short clearance. Further, since the flow of the cooling medium within the cooling passage becomes smooth to thereby enable uniform cooling of the whole sleeve, deformation distortion due to cooling can be prevented. As a result, the bearing internally engaged with the sleeve can also be prevented against distortion and the rotation precision of the main spindle can be maintained at a high level, thereby enabling enhancement in the working precision of the main spindle.

### BRIEF DESCRIPTION OF THE DRAWINGS

Fig. 1 is a section view of a first embodiment of a main spindle apparatus according to the invention.
Fig. 2 is an enlarged section view of the neighborhood of a free side bearing shown in Fig. 1.
Fig. 3 is a partial section view of the outer peripheral surface of a sleeve for explanation of an annular groove, corresponding to Fig. 2.
Fig. 4 is a section view of an annular groove.
Fig. 5A is a section view of an annular groove according to a modification.
Fig. 5B is a section view of an annular groove according to a modification.
Fig. 5C is a section view of an annular groove according to a modification.
Fig. 6 is a partially broken side view of a sleeve including two chamfer parts respectively formed in the two end edges of the outer peripheral surface thereof.
Fig. 7 is a partially broken side view of a sleeve including two chamfer parts respectively formed in the shoulder parts of the annular groove.
Fig. 8 is an enlarged section view of the neighborhood of the free side bearing according to a second embodiment of a main spindle apparatus of the invention.
Fig. 9 is a partial section view of the outer peripheral surface of a sleeve for explanation of an annular groove, corresponding to Fig. 8.
Fig. 10 is a graph to show compared temperature rises obtained in the different cooling structures of the free side bearings.
Fig. 11 is a section view of the structure of a conventional fixed side bearing.
Fig. 12 is a section view of the structure of a conventional free side bearing.

### MODES FOR CARRYING OUT THE INVENTION

Description is given below specifically of embodiments of a main spindle apparatus according to the invention with reference to the drawings.

### (First Embodiment)

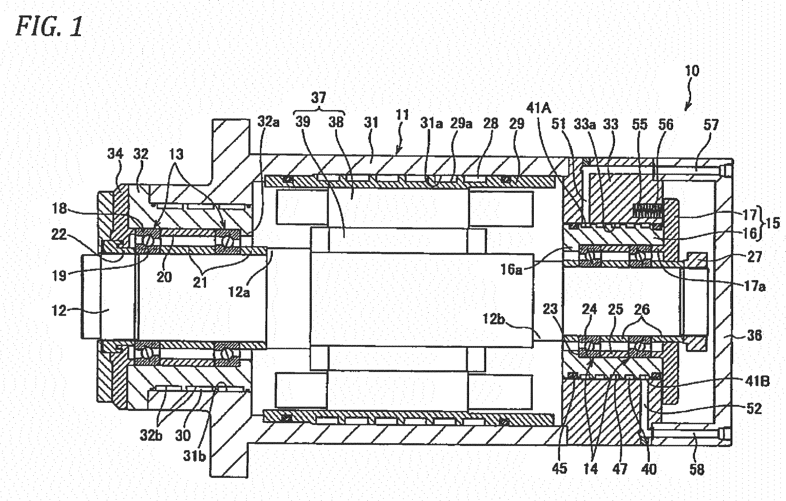

Firstly, description is given of the whole structure of a main spindle apparatus according to a first embodiment of the invention with reference to Fig. 1.

A main spindle apparatus 10 includes a housing 11, a rotation shaft 12 having a tool (not shown) mounted on one end (in Fig. 1, the left end) thereof and rotatable relative to the housing 11, a pair of fixed side bearings (in this embodiment, angular ball bearings) 13, 13 arranged on the front end side (in Fig. 1, the left side) of the rotation shaft 12, a pair of free side bearings (in this embodiment, angular ball bearings) 14, 14 arranged on the rear end side (in Fig. 1, the right side) of the rotation shaft 12, and a sleeve 15 inserted into the housing 11 and slidingly movable in the axial direction.

The housing 11 includes a substantially cylindrical housing main body 31, a front housing 32 engagingly fixed to the front end side of the housing main body 31, and a rear housing 33 engagingly fixed to the rear end side of the housing main body 31. A front cover 34 is fastened and fixed to the front end of the front housing 32, while a rear cover 36 is fastened and fixed to the rear end of the rear housing 33.

A stator 38 of a built-in motor 37 is fixed to a sleeve 29 internally engageable with the inner peripheral surface 31a of the housing main body 31. A rotor 39 is fixed to the axial-direction intermediate part of the rotation shaft 12 while it is opposed to the stator 38. A rotation magnetic field generated by the stator 38 applies a rotation force to the rotor 39, thereby rotationally driving the rotation shaft 12. The sleeve 29 has multiple annular grooves 29a in the outer peripheral surface thereof and, when the sleeve 29 is internally engaged with the housing main body 31, cooling passages 28 are formed between the grooves 29a and inner peripheral surface 31a.

While outer rings 18, 18 are internally engaged with the front housing 32 and inner rings 19, 19 are externally engaged with the rotation shaft 12, the fixed side bearings 13, 13 bear the front end side of the rotation shaft 12 rotatably. The outer rings 18, 18 of the fixed side bearings 13, 13, while being held by the step part 32a of the front housing 32 and front cover 34 through an outer ring spacer 20, are positioned in the axial direction relative to the front housing 32. The inner rings 19, 19, while being held by the front step part 12a of the rotation shaft 12 and a nut 22 threadedly engaged with the rotation shaft 12 through an inner ring spacer 21, are positioned in the axial direction relative to the rotation shaft 12. The front housing 32 has multiple annular grooves in the outer peripheral surface thereof and, when the front housing 32 is internally engaged with the housing main body 31, there are formed cooling passages 30 between the grooves 32b and the inner peripheral surface 31b of the housing main body 31.

The inner peripheral surface 33a of the rear housing 33 is engaged by a substantially cylindrical bearing sleeve 16 movable in the axial direction. Also, on such end face of the bearing sleeve 16 as is opposed to a tool mounting side thereof, there is mounted by a screw (not shown) an outer ring retainer 17 extending outward in the radial direction from the outer peripheral surface of the bearing sleeve 16. Here, the bearing sleeve 16 and outer ring retainer 17 constitute the sleeve 15.

The rear housing 33 includes multiple spring chambers 55 respectively opened in the counter-tool-side end face thereof (in Fig. 1, the right side face), while they are opposed to the tool side end face of the flange part of the outer ring retainer 17 extending outward in the radial direction from the bearing sleeve 16. A coil spring 56 is stored into the spring chamber 55 and is interposed between the flange part of the outer ring retainer 17 and spring chamber 55. The coil spring 56 applies an axial direction (in Fig. 1, in the right direction) elastic force to the sleeve 15, thereby applying a fixed pressure preload to the fixed side bearings 13, 13 and free side bearings 14, 14.

While outer rings 23, 23 are internally engaged with the bearing sleeve 16 and inner rings 24, 24 are externally engaged with the rotation shaft 12, the free side bearings 14, 14 bear the rear end side of the rotation shaft 12 rotatably. The outer rings 23, 23 of the free side bearings 14, 14, while being held by the step part 16a of the bearing sleeve 16 and the annular projection part 17a of the outer ring retainer 17 through an outer ring spacer 25, are positioned in the axial direction relative to the bearing sleeve 16. The inner rings 24, 24, while being held by the rear step part 12b of the rotation shaft 12 and a nut 27 threadedly engaged with the rotation shaft 12 through an inner ring spacer 26, are positioned in the axial direction relative to the rotation shaft 12.

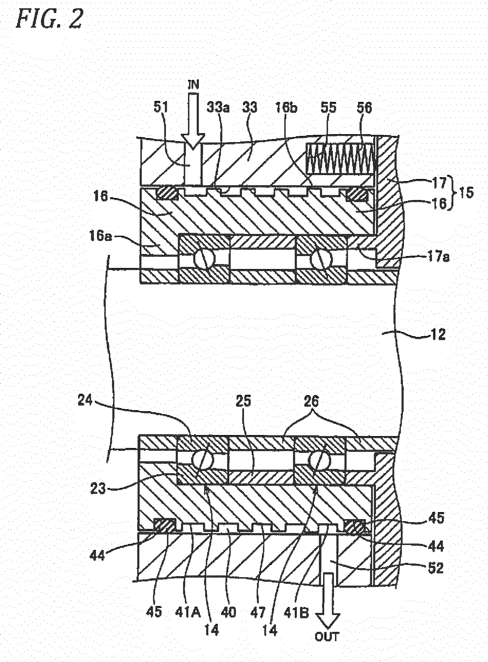

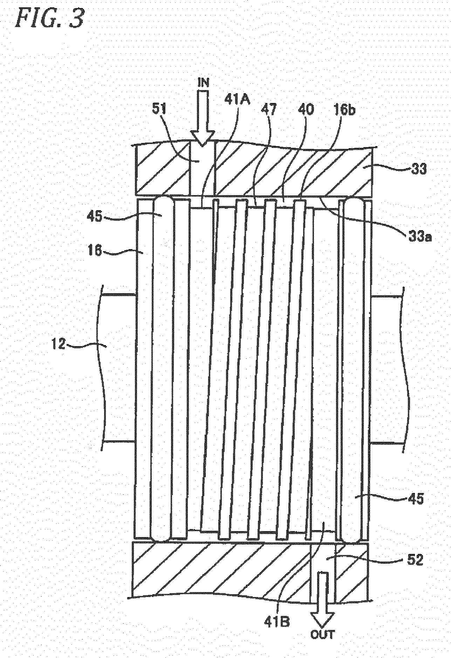

As shown in Figs. 2 and 3, the bearing sleeve 16 includes, in the outer peripheral surface 16b thereof, a first annular groove 41A formed on the axial-direction one end side of the sleeve 15, a second annular groove 41B formed on the axial-direction other end side of the sleeve 15, and a streak of spiral groove 47 having one end communicating with the first annular groove 41A and the other end communicating with the second annular groove 41B. The first annular groove 41A, second annular groove 41B and spiral groove 47, when the bearing sleeve 16 is engaged with the inner peripheral surface 33a of the rear housing 33, form a cooling passage 40 between the mutually opposed surfaces (the outer peripheral surface of the bearing sleeve 16 and the inner peripheral surface 33a of the rear housing 33). A cooling medium such as cooling oil is allowed to flow through the cooling passage 40.

Also, a supply port 51 of a supply passage 57 for supplying the cooling medium of the cooling passage 40 is opened toward the first annular groove 41A situated nearest to the built-in motor 37, while a discharge port 52 of a discharge passage 58 for discharging the cooling medium is opened toward the second annular groove 41B most distant from the built-in motor 37 and is set 180° out of phase with the supply port 51. And, the cooling medium pressure fed from a pump (not shown) is supplied from the supply port 51, is allowed to flow within the cooling passage 40 and, after it cools the periphery of the cooling passage 40, is discharged from the discharge port 52. By supplying the cooling medium from the first annular groove 41A existing near to the built-in motor 37, a part to generate a large amount of heat, that is, a part easy to increase in temperature can be cooled by the cooling medium of lower temperatures, thereby enabling high-efficiency cooling. Also, by arranging the supply port 51 and discharge port 52 180° out of phase with each other, the cooling passage 40 provides a symmetric arrangement, thereby enabling uniform cooling. Here, the phase difference between the supply port 51 and discharge port 52 can be changed arbitrarily according to the arrangement of peripheral parts, for example, the same phase may also be employed.

Also, the bearing sleeve 16 includes in the outer peripheral surface 16b thereof a pair of annular concave grooves 44 formed outwardly of the cooling passage 40 in the axial direction. An O ring 45 made of an elastic member is mounted in each annular concave groove 44, thereby sealing the engagement part between the inner peripheral surface 33a of the rear housing 33 and bearing sleeve 16. The crushing margin of the O ring 45 may preferably be in the range of 0.1 mm ∼ 2.0 mm and, for easier removal of the sliding failure of the bearing sleeve, in the range of 0.2 mm - 0.5 mm. Also, for the engagement clearance between the bearing sleeve 16 and rear housing 33, a difference between the diameter dimensions thereof, that is, a dimension expressed by [inside diameter of rear housing 33 - outside diameter of bearing sleeve 16] may preferably be set in the range of 5 µm ∼ 100 µm and, for easier removal of the sliding failure caused by short clearance or inclination of the bearing sleeve 16, in the range of 15 µm ∼ 50 µm.

As the material of the O ring 45, in addition to ordinary material such as nitrile rubber or acrylic rubber, silicon rubber and various elastomers having heat resistance corresponding to generation of heat of the motor-built-in spindle, or fluororubber having swelling resistance and oil resistance corresponding to the cooling medium are selected as needed. Here, the sliding amount of the bearing sleeve 16 and rear housing 33 in this embodiment is such degree of displacement amount as can escape from the deformation caused by the working load and the thermal axial-direction expansion of the spindle and is thus ±0.5 mm or less, at most, ±1 mm or less. Therefore, there may preferably be selected a material which hardly incurs degradation of seal performance owing to sliding wear caused by such large and quick strokes as can be seen in a piston ring to be mounted on the movable part, and has an excellent creep resistance characteristic against aging change (heat and initial interference engagement).

As shown in Fig. 1, when the main spindle apparatus 10 includes multiple cooling passages such as a cooling passage 30 for cooling the fixed side bearings 13, 13, a cooling passage 28 for cooling the stator 38 of the built-in motor 37, and a cooling passage 40 for cooling the free side bearings 14, 14, as an optimum cooling system for the free side bearings 14, 14, preferably, a cooling apparatus (not shown) may be provided separately from other cooling passages 28 and 30, that is, may be provided independently for the cooling passage 40. Thus, the temperature adjustment of the cooling medium can be made without being influenced by the conditions of other cooling passages 28 and 30.

However, in a practically difficult case, the cooling apparatus may not be made independent but only the cooling passage 40 may be provided independently. In this case, a restrictor may be provided somewhere in a supply side pipe to the cooling passage 40 to control the supply amount of the cooling medium, thereby enabling adjustment for the optimum cooling condition.

Here, in the case of a one-passage cooling structure, when there is employed a passage structure in which the cooling medium is first passed through the cooling passage 28 for cooling the stator 38 having a tendency to provide a large heat generation amount and is then circulated to the cooling passage 40 for cooling the free side bearings 14, 14, the temperature of the whole main spindle apparatus 10 can be lowered more efficiently. Also, in order to cool the temperatures of the free side bearings 14, 14, the above passage structure may be reversed, that is, the lower-temperature cooling medium may be first circulated to the cooling passage 40. The passage structure can be selected as needed.

As described above, according to the main spindle apparatus 10 of this embodiment, between the outer peripheral surface 16b of the bearing sleeve 16 and the inner peripheral surface 33a of the rear housing 33, there is formed the cooling passage 40 through which the cooling medium can flow. The cooling passage 40 includes the first annular groove 41A formed on the axial-direction one end side of the bearing sleeve 16, second annular groove 41B formed on the axial-direction other end side of the bearing sleeve 16, and a streak of spiral groove 47 having one end (groove start end side end) communicating with the first annular groove 41A and the other end (groove terminal end side end) communicating with the second annular groove 41B. Thus, the bearing sleeve 16 internally engaged by the free side bearings 14, 14 can be cooled directly, thereby enabling efficient cooling of the free side bearings 14, 14.

Also, use of the spiral groove 47 in the cooling passage 40 allows the cooling medium to flow smoothly along the spiral groove in one direction toward the discharge side, thereby enabling enhancement in heat cooling efficiency. The bearing sleeve 16 includes the first and second annular grooves 41A and 41B formed along the circumferential direction. The cooling medium is supplied to and discharged from the spiral groove 47 through the first and second annular grooves 41A and 41B. This eliminates the need to match the circumferential phases between the supply port 51 of the rear housing 33 and one end of the spiral groove 47 and between the discharge port 52 and the other end of the spiral groove 47, thereby enabling facilitation of the structure design and assembling operation of the main spindle apparatus.

To work the spiral groove 47 of the bearing sleeve 16, firstly, an end mill tool is inserted into the bearing sleeve 16 from any one of the axial-direction end neighborhoods thereof to incise it in the sleeve radial direction to dig a groove. After then, while maintaining such incising operation, the tool is fed spirally to work a spiral groove. And, when the tool reaches any one of the other end neighborhoods in the sleeve axial direction, the feeding of the tool is stopped and the tool is pulled up, thereby finishing the groove.

Generally, to work a spiral groove in a cylindrical member has been very difficult, the working precision has been hard to enhance, and the working cost has been expensive. However, recently, with wide use of a multiple spindle machine and a combined working machine, the spiral groove 47 of this structure can have been worked easily, highly accurately and at low costs.

Since the cooling passage 40 lowers the internal temperatures of the free side bearings 14, 14, lubrication oil film cut due to lowered viscosity in the rolling contact part and in the cage guide surface during rotation is made hard to occur, whereby the shortened life thereof and the seizure of the free side bearings 14, 14 due to poor lubrication can be prevented.

Also, since the rear housing 33 and bearing sleeve 16 are cooled simultaneously, the radial shrinkage amounts of these two members are uniform and thus a clearance in the slide part (clearance between the rear housing 33 and bearing sleeve 16) is not reduced, whereby slide failures due to the short clearance can be prevented. Further, since the flow of the cooling medium within the first, second annular grooves 41A, 41B and spiral groove 47 becomes smooth to thereby enable uniform cooling of the whole bearing sleeve 16, deformation distortion due to cooling can be prevented. As a result, the free side bearings 14, 14 internally engaged with the bearing sleeve can also be prevented against distortion and the rotation precision of the rotation shaft 12 can be maintained at a high level, thereby enabling enhancement in the working precision of the main spindle apparatus 10.

Also, since cooling oil is always circulating in the slide part, the friction coefficient thereof is small, thereby enabling further enhancement in the slide performance. There is also a method in which a ball guide (ball bush) or the like is arranged in the slide part and the sliding performance is improved due to the rolling action of the ball guide. However, in this method, since the rigidity is lowered, there are raised troubles such as generation of vibrations and reduction in the natural vibrations of the spindle. In order to enhance the rigidity, when a preload clearance (that is, a radial clearance between housing inside diameter, ball and sleeve outside diameter) is increased, adversely, the sliding performance gets worse than when the slide part slides by its own slide property.

And, even when initial-stage fletching abrasion powder is generated between the rear housing 33 and bearing sleeve 16 due to chatter vibrations possibly occurring during a heavy cutting operation or the like, the cooling medium carries away such minute abrasion powder to the outside, thereby enabling suppression of further progress of such fletching with the abrasion powder serving as an aid.

Also, the supply port 51 for supplying the cooling medium is opened toward the first annular groove 41A situated on the axial-direction one end side and the discharge port 52 for discharging the cooling medium is opened toward the second annular groove 41B situated on the axial-direction other end side, the flow of the cooling medium within the first, second annular grooves 41A, 41B and spiral groove 47 is smooth, thereby enabling uniform cooling of the whole bearing sleeve 16. Thus, the high rotation precision can be maintained.

Further, since, on the axial-direction two sides of the cooling passage 40, there are arranged O rings 45 for sealing liquid tight between the outer peripheral surface 16b of the bearing sleeve 16 and the inner peripheral surface 33a of the rear housing 33, the cooling medium is prevented against leakage and the damping characteristic of the main spindle apparatus 10 is enhanced due to the elasticity of the O rings 45, thereby enabling enhancement in the dynamic rigidity having an influence, particularly, on the working property of a member hard to be cut. In addition, there is provided a damping action due to the damper effect of the cooling medium flowing in the slide part.

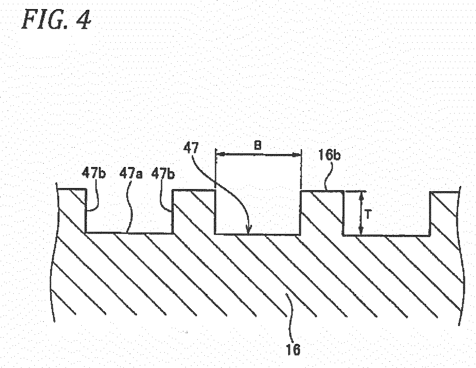

Here, in the above embodiment, the spiral groove 47 (first and second annular grooves 41A and 41B as well), as shown in Fig. 4, is formed to have a rectangular section shape by its bottom surface 47a and side wall surfaces 47b. The sizes of the groove width B and depth T of the spiral groove 47 having such rectangular section shape can be selected properly.

When B>T, since the radial depth of the spiral groove 47 is shallow, the radial thickness of the bearing sleeve 16 can be secured, thereby enabling enhancement in the working precision of the sleeve. Such shape is applied to a case where a serious consideration is laid on the working precision enhancement of the sleeve or a case where the rigidity of the main spindle must be enhanced. Also, when B<T, since the radial depth of the spiral groove 47 is deep, the spiral groove 47 can be formed near to the bearing, thereby enabling higher-efficiency cooling of the bearing neighborhood. As a result, the cooling efficiency of the main spindle can be enhanced. Such shape can be applied to a case where a serious consideration is laid on the cooling performance enhancement of the main spindle. When B=T, the above effects can be obtained in good balance.

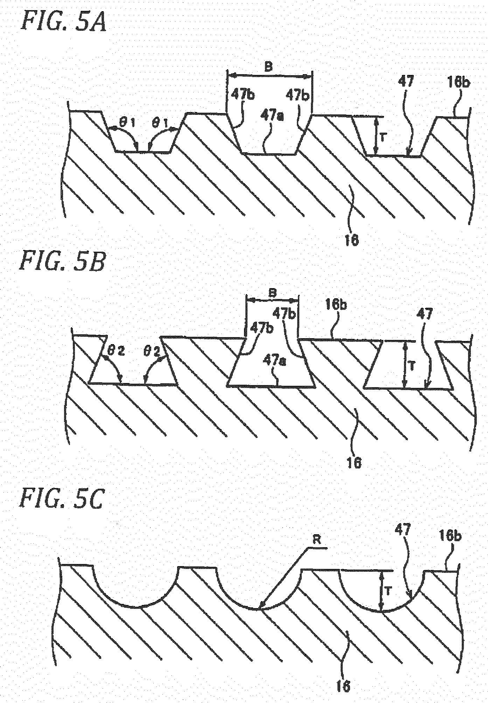

Also, the section shape of the spiral groove 47(first and second annular grooves 41A and 41B as well) can include, besides the rectangular shape, various shapes as shown in Figs. 5A - 5C. For example, as shown in Figs. 5A and 5B, the side wall surface 47b of the spiral groove 47 may also be formed inclined relative to a direction perpendicular to the axial direction, that is, the radial direction.

Specifically, the spiral groove 47 of the bearing sleeve 16 shown in Fig. 5A is a trapezoidal groove in which the groove width B increases gradually from the bottom surface 47a of the spiral groove 47 toward the outer peripheral surface 16b of the bearing sleeve 16. That is, in the trapezoidal spiral groove 47, since the section shape of the spiral groove 47 provides an obtuse angle (θ₁) between the bottom surface 47a and side wall surface 47b, it has no interference with the inner peripheral surface 33a of the rear housing 33, thereby enabling enhancement in the sliding performance. Also, in the spiral groove 47 of the bearing sleeve 16 shown in Fig. 5B, the groove width B reduces gradually from the bottom surface 47a of the spiral groove 47 toward the outer peripheral surface 16b of the bearing sleeve 16, thereby providing a so called dovetail groove. That is, in the dovetail spiral groove 47, since the section shape of the spiral groove 47 provides an acute angle (θ₂) between the bottom surface 47a and side wall surface 47b, the surface area of the neighborhood of the free side bearings 14, 14 serving as the heat generation source is large and thus the heat of the free side bearings 14, 14 can be efficiently transmitted to the cooling medium, thereby enabling enhancement in the cooling performance.

Also, the spiral groove 47 of the bearing sleeve 16 shown in Fig. 5C provides a semicircular section having a radius of curvature R. Therefore, it can be worked by a round-shaped tool and the working abrasion of the tool is small, thereby enabling enhancement in workability.

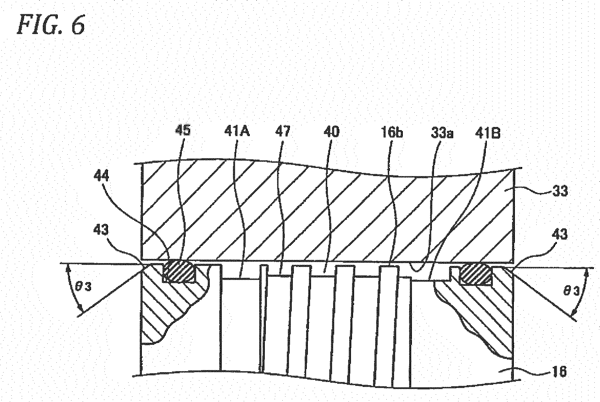

Also, in both end edges of such outer peripheral surface 16b of the bearing sleeve 16 as is opposed to the inner peripheral surface 33a of the rear housing 33, as shown in Fig. 6, there may also be formed chamfer parts 43. The angle θ₃ of the chamfer part 43 relative to the outer peripheral surface 16b, preferably, may be 3° - 45°, more preferably, 3° - 30°. Thus, even when the bearing sleeve 16 is inclined within the rear housing 33, it is prevented against interference with the inner peripheral surface 33a of the rear housing 33, thereby securing the sliding performance.

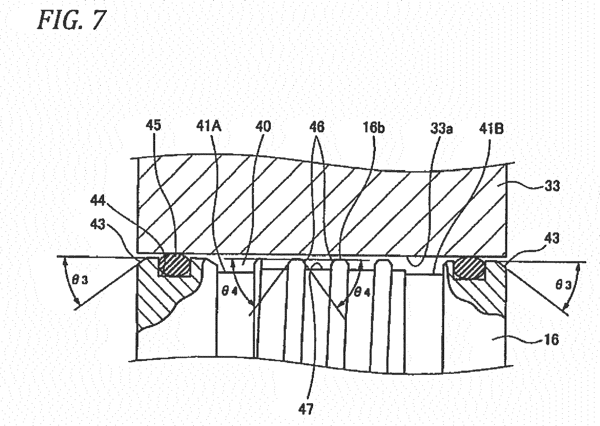

Also, as shown in Fig. 7, when, in addition to the chamfer parts 43 in the two end edges of the bearing sleeve 16, chamfer parts 46 are formed in the top parts (shoulder parts) of the side walls of the spiral groove 47 (first and second annular grooves 41A and 41B as well), it is further prevented against interference with the inner peripheral surface 33a of the rear housing 33, thereby maintaining the sliding performance.
The chamfer angle θ₄ of the shoulder part of the spiral groove 47, preferably, may be 3° ∼ 45°, more preferably, 3° ∼ 30°.

### (Second Embodiment)

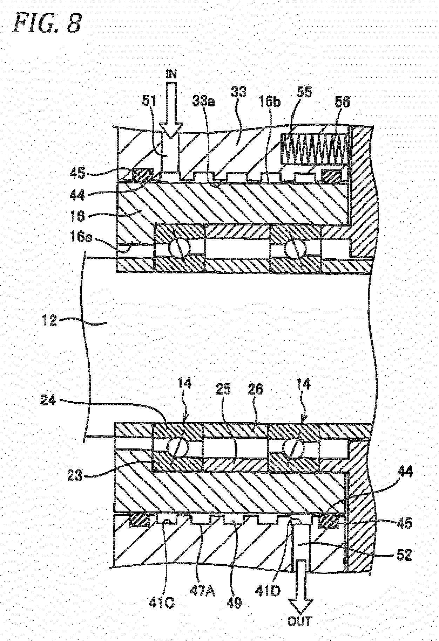

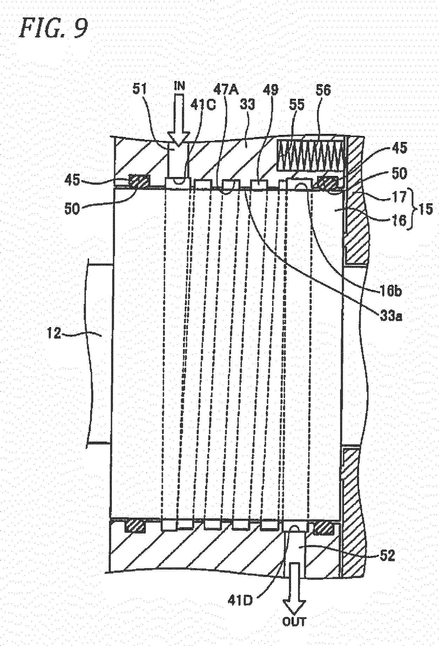

Next, description is given of a second embodiment of a main spindle apparatus according to the invention with reference to Figs. 8 and 9. Here, since the main spindle apparatus of this embodiment is similar to the first embodiment except that an annular groove is formed in the inner peripheral surface of a rear housing, the same or equivalent parts thereof to the first embodiment are given the same designations in the drawings and thus the description thereof is omitted or simplified. Also, only the free side bearing neighborhood is illustrated and described.

As shown in Figs. 8 and 9, the rear housing 33 includes, in the inner peripheral surface 33a thereof, a first annular groove 41C formed on the axial-direction one end side of the bearing sleeve 16, a second annular groove 41D formed on the axial-direction other end side of the bearing sleeve 16, and a streak of spiral groove 47A having one end communicating with the first annular groove 41C and the other end communicating with the second annular groove 41D. The first, second annular grooves 41C and 41D and spiral groove 47A, when the bearing sleeve 16 is engaged with the inner peripheral surface 33a of the rear housing 33, form a cooling passage 49 between the outer peripheral surface 16b of the bearing sleeve 16 and themselves through which a cooling medium can flow.

Also, the rear housing 33 includes in the inner peripheral surfaces 33a thereof, a pair of annular concave grooves 50 formed outwardly of the cooling passage 49 in the axial direction. An O ring made of an elastic member is mounted in each annular concave groove 50, thereby sealing the engaged part between the inner peripheral surfaces 33a of the rear housing 33 and bearing sleeve 16.

Thus, in the main spindle apparatus 10 of this embodiment as well, between the outer peripheral surface 16a of the bearing sleeve 16 and the inner peripheral surfaces 33a of the rear housing 33, there is formed the cooling passage 49 through which the cooling medium can flow. The cooling passage 49 includes the first annular groove 41C arranged on the axial-direction one end side of the bearing sleeve 16, second annular groove 41D arranged on the axial-direction other end side of the bearing sleeve 16, and a streak of spiral groove 47A having one end communicating with the first annular groove 41C and the other end communicating with the second annular groove 41D. Thus, this embodiment can provide similar effects to the first embodiment.

The remaining structures and operation effects of this embodiment are also similar to the first embodiment.

Here, in this embodiment as well, the section shapes of the spiral groove 47A, first and second annular grooves 41C and 41D, and the shapes of the two end edges of the inner peripheral surface 33a of the rear housing 33 can be used similarly to the section shapes of the spiral groove 47, first and second annular grooves 41A and 41B, and the shapes of the two end edges of the outer peripheral surface 16b of the bearing sleeve 16 of the first embodiment.

That is, chamfer parts may also be formed in the two end edges of the inner peripheral surface 33a of the rear housing 33, and the side wall surfaces of the spiral groove 47 may also be inclined relative to a direction perpendicular to the axial direction.

Here, the invention is not limited to the above respective embodiments but can be changed or improved properly.

For example, the axial-direction groove width of the spiral groove may be identical or different. The axial-direction pitch of the spiral shape can also be set arbitrarily. Here, in this structure, the motor side is regarded as the cooling medium supply side and the main spindle end side is regarded as the cooling medium discharge side. However, this is not limitative.

Also, in the above embodiment, description has been given of the main spindle apparatus in which the preload is applied between the fixed side bearing and free side bearing using the fixed pressure preload. However, this is not limitative but the invention can also be applied to a main spindle apparatus in which preloads are respectively applied to fixed side bearings and free side bearings, while similar effects can be provided. Thus, the free side bearing is not limited to the angular ball bearing but other rolling bearings such as a cylindrical roller bearing may also be applied.

### Test Example

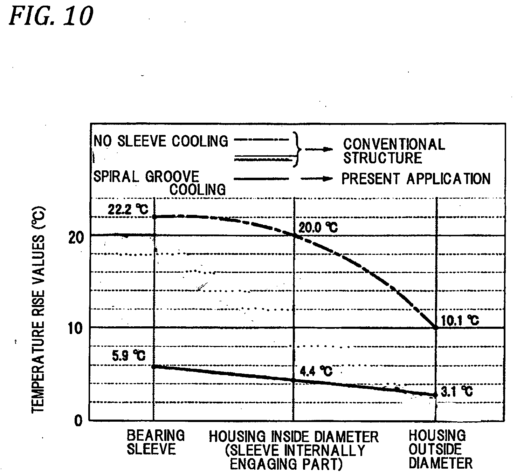

Here, using the cooling structure (of the first embodiment) of the invention including the cooling passage having the spiral groove in the outer peripheral surface of the bearing sleeve 16, and a non-cooling structure including no cooling passage in a bearing sleeve or in a rear housing, temperature rise values from the bearing sleeve inside diameter to the housing outside diameter were compared. Fig. 10 is a graph of the compared temperature rise values from the bearing sleeve inside diameter to the housing outside diameter between the cooling structures.

As can be seen obviously from Fig. 10, when checking the respective cooling structures for the temperature rises thereof, the temperature rise value of the cooling structure of the invention including the cooling passage 40 having the spiral groove in the outer peripheral surface of the bearing sleeve 16 is smallest, showing that the main spindle apparatus 10 is cooled with high efficiency. Also, a difference in the temperature rise values between the housing inside diameter (sleeve internally engaged part) and bearing sleeve is very small, and thus reduction in the engagement clearance of the slide part due to a thermal expansion difference can be decreased, thereby enabling maintenance of excellent sliding performance.

Also, since the temperature of the bearing sleeve is about 16°C lower, the bearing temperature becomes lower, thereby enabling maintenance of the base oil viscosity of the lubricant and thus enabling enhancement in oil film formation in the rolling contact part. In the case of grease lubrication, the base oil is made hard to separate from consistency increase agent (oil separation) and flow-out of grease to the outside of the bearing is reduced, thereby enabling extension of grease life.

### DESCRIPTION OF REFERENCE NUMERALS AND SIGNS

- 10:: Main spindle apparatus
- 11:: Housing
- 12:: Rotation shaft
- 13:: Fixed side bearing
- 14:: Free side bearing
- 16:: Bearing sleeve (sleeve)
- 16b:: Outer peripheral surface of sleeve
- 18, 23:: Outer ring
- 19, 24:: Inner ring
- 28, 30, 40, 49:: Cooling passage
- 31:: Housing main body
- 32:: Front housing
- 33:: Rear housing (housing)
- 33a:: Inner peripheral surface of housing
- 41A, 41C:: First annular groove
- 41B, 41D:: Second annular groove
- 43:: Chamfer part
- 45: O: ring (elastic member)
- 51:: Supply port
- 52:: Discharge port

## Claims

1. A main spindle apparatus (10), comprising:
a housing (11);
a rotation shaft (12) rotatable relative to the housing (11);
a fixed side bearing (13) having an inner ring externally engaged with one end side of the rotation shaft (12) and an outer ring fixed to the housing (11);
a sleeve (15) arranged within the housing (11) on the other end side of the rotation shaft (12) and movable in the axial direction of the rotation shaft (12); and
a free side bearing (14) having an inner ring externally engaged with the other end side of the rotation shaft (12) and an outer ring internally engaged with the sleeve (15), **characterised in**:
a cooling passage (40), allowing a cooling medium to flow therethrough, is formed between the outer peripheral surface (16b) of the sleeve (15) and the inner peripheral surface (33a) of the housing (11), the outer and inner peripheral surfaces being opposed to each other;
the cooling passage (40) includes a first annular groove (41A) arranged on the axial-direction one end side of the sleeve (15), a second annular groove (41B) arranged on the other end side of the sleeve, and a streak of spiral groove (47) having one end communicating with the first annular groove (41A) and the other end communicating with the second annular groove (41B), the grooves being formed in the outer peripheral surface (16b) of the sleeve (15) or in the inner peripheral surface (33a) of the housing (11); and
the cooling medium is supplied to the first annular groove (41A) and after having flown through the cooling passage (40), the cooling medium is discharged from the second annular groove (41B).

2. The main spindle apparatus according to Claim 1, wherein
annular elastic members (45), configured to seal liquid tight between the outer peripheral surface (16b) of the sleeve (15) and the inner peripheral surface (33a) of the housing (11), are arranged on the axial-direction two sides of the cooling passage (40).

3. The main spindle apparatus according to Claim 1 or 2, wherein
chamfer parts (43) are formed on the two end edges of the outer peripheral surface (16b) of the sleeve (15) opposed to the inner peripheral surface (33a) of the housing (11).

4. The main spindle apparatus according to any one of Claims 1 to 3, wherein
the side wall surface of at least any one of the first annular groove (41A), the second annular groove (41A) and the spiral groove (47) is inclined relative to a direction perpendicular to the axial direction.

## Patentansprüche

1. Hauptspindelvorrichtung (10), umfassend:
ein Gehäuse (11);
eine Drehwelle (12), die relativ zu dem Gehäuse (11) drehbar ist;
ein Lager auf der festen Seite (13) mit einem Innenring, der extern mit einer Endseite der Drehwelle (12) in Eingriff steht, und einem Außenring, der an dem Gehäuse (11) fixiert ist;
eine Muffe (15), die in dem Gehäuse (11) an der anderen Endseite der Drehwelle (12) angeordnet und in der axialen Richtung der Drehwelle (12) beweglich ist; und
ein Lager auf der freien Seite (14) mit einem Innenring, der extern mit der anderen Endseite der Drehwelle (12) in Eingriff steht, und einem Außenring, der intern mit der Muffe (15) in Eingriff steht,
**gekennzeichnet durch:**
einen Kühlkanal (40), durch den ein Kühlmedium fließen kann und der zwischen der Außenumfangsfläche (16b) der Muffe (15) und der Innenumfangsfläche (33a) des Gehäuses (11) ausgebildet ist, wobei die Außen- und die Innenumfangsfläche einander gegenüber liegen;
wobei der Kühlkanal (40) eine erste Ringnut (41A) aufweist, die auf der in der axialen Richtung einen Endseite der Muffe (15) angeordnet ist, und eine zweite Ringnut (41B), die auf der anderen Endseite der Muffe angeordnet ist, und einen Streifen einer Spiralnut (47), deren eines Ende mit der ersten Ringnut (41A) in Verbindung steht und deren anderes Ende mit der zweiten Ringnut (41B) in Verbindung steht, wobei die Nuten in der Außenumfangsfläche (16b) der Muffe (15) oder in der Innenumfangsfläche (33a) des Gehäuses (11) ausgebildet sind; und
wobei das Kühlmedium zu der ersten Ringnut (41A) geleitet wird und nachdem es durch den Kühlkanal (40) geflossen ist, das Kühlmedium aus der zweiten Ringnut (41B) ausgestoßen wird.

2. Hauptspindelvorrichtung nach Anspruch 1,
wobei ringförmige elastische Elemente (45), die dazu konfiguriert sind, eine flüssigkeitsdichte Dichtung zwischen der Außenumfangsfläche (16b) der Muffe (15) und der Innenumfangsfläche (33a) des Gehäuses zu schaffen, auf den in der axialen Richtung beiden Seiten des Kühlkanals (40) angeordnet sind.

3. Hauptspindelvorrichtung nach Anspruch 1 oder 2, wobei
abgefaste Teile (43) an den beiden Endkanten der Außenumfangsfläche (16b) der Muffe (15) gegenüber der Innenumfangsfläche (33a) des Gehäuses (11) ausgebildet sind.

4. Hauptspindelvorrichtung nach einem der Ansprüche 1 bis 3, wobei
die Seitenwandfläche von mindestens einer aus der ersten Ringnut (41A), der zweiten Ringnut (41A) und der Spiralnut (47) relativ zu einer Richtung lotrecht zu der axialen Richtung geneigt ist.

## Revendications

1. Appareil à broche principale (10) comprenant:
un logement (11),
un arbre de rotation (12) pouvant tourner par rapport au boîtier (11);
un palier latéral fixe (13) ayant une bague interne en prise externe avec un côté d'extrémité de l'arbre de rotation (12) et une bague externe fixée au logement (11);
un manchon (15) agencé à l'interne du logement (11) sur l'autre côté d'extrémité de l'arbre de rotation (12) et mobile dans la direction axiale de l'arbre de rotation (12); et
un palier latéral libre (14) ayant une bague interne en prise externe avec l'autre côté d'extrémité de l'arbre de rotation (12) et une bague externe en prise interne avec le manchon (15), **caractérisé en ce**
**qu'**un passage de refroidissement (40) permettant le passage d'un fluide de refroidissement entre la surface périphérique externe (16b) du manchon (15) et la surface périphérique interne (33a) du logement (11), les surfaces périphériques externe et interne étant opposées l'une à l'autre;
le passage de refroidissement (40) comprend une première rainure annulaire (41A) agencée dans la direction axiale un côté d'extrémité du manchon (15), une seconde rainure annulaire (41B) agencée sur l'autre côté d'extrémité du manchon, et une strie de rainure en spirale (47) ayant une extrémité communiquant avec la première rainure annulaire (41A) et l'autre extrémité communiquant avec la seconde rainure annulaire (41B), les rainures étant formées dans la surface périphérique externe (16b) du manchon (15) ou dans la surface périphérique interne (33a) du logement (11); et
le fluide de refroidissement est acheminé à la première rainure annulaire (41A) et après avoir traversé le passage de refroidissement (40), le fluide de refroidissement est évacué de la seconde rainure annulaire (41B).

2. Appareil à broche principale selon la revendication 1, dans lequel:
des éléments élastiques annulaires (45), configurés pour assurer l'étanchéité liquide entre la surface périphérique externe (16b) du manchon (15) et la surface périphérique interne (33a) du logement (11), deux côtés du passage de refroidissement (40) sont disposés dans la direction axiale.

3. Appareil à broche principale selon les revendications 1 ou 2, dans lequel:
des parties chanfreinées (43) sont formées sur les deux bords d'extrémité de la surface périphérique externe (16b) du manchon (15) opposée à la surface périphérique interne (33a) du logement (11).

4. Appareil à broche principale selon l'une quelconque des revendications 1 à 3, dans lequel:
la surface de paroi latérale d'au moins l'une quelconque de la première rainure annulaire (41A), de la deuxième rainure annulaire (41A) et de la rainure en spirale (47) est inclinée par rapport à une direction perpendiculaire à la direction axiale.
